# EUROPÄISCHE PATENTANMELDUNG

(11) **EP 2 463 991 A2**
(43) Veröffentlichungstag der Anmeldung: **13.06.2012**
(21) Anmeldenummer: 11192674.7
(22) Anmeldetag: 08.12.2011
(51) Int. Cl.: H02K 9/19, H02K 1/20, H02K 1/32

(54) **Kühlsystem für eine rotierende elektrische Maschine höchster Leistungsdichte**

(30) Priorität: 08.12.2010 DE 102010061113; 02.12.2011 DE 102011056007
(71) Anmelder: Antriebstechnik Katt Hessen GmbH, 34576 Homberg/Efze (DE)
(72) Erfinder: Köhring, Pierre, 01067 Dresden (DE)
(74) Vertreter: Drechsler, Gottfried

(57) **Zusammenfassung**

Die Erfindung betrifft ein Kühlsystem für eine rotierende elektrische Maschine höchster Leistungsdichte mit Fluidkühlung in einem geschlossenen Kühlmittelkreislauf im Ständer und/oder im Läufer mit Teilblechpaketen.

Aufgabe ist es ein Kühlsystem zu schaffen, dass einen geschlossenen Kühlmittelkreislauf im Ständer und/oder im Läufer ermöglicht, wobei das erwärmte Kühlmedium so schnell als möglich aus der Maschine abführt werden soll, eine konstante Temperaturverteilung in der Maschine gewährleistet ist, eine deutlich höhere thermische Belastung erreichbar ist und wobei ein minimales Gewicht je kW-Wellenleistung erreicht werden soll.

Das neuartige erfindungsgemäße Kühlsystem für eine rotierende elektrische Maschine höchster Leistungsdichte basiert auf einer Fluidkühlung mit einem geschlossenen Kühlmittelkreislauf im Ständer und/oder im Läufer. Der Ständer besteht dabei aus mindestens zwei oder mehreren miteinander in bekannter Art und Weise verbundenen Teilblechpaketen, wobei die Teilblechpakete voneinander definiert beabstandet sind. Der Läufer kann entweder aus einem oder auch aus mehreren voneinander definiert beabstandeten massiven Teilkörpern oder auch aus geblechten Läuferteilblechpaketen bestehen. Zwischen den Ständerteilblechpaketen 2 und/oder den Läuferteilpaketen und/oder Läuferteilblechpaketen 4 sind neuartige fluiddichte Kühlteilblechpakete 10 angeordnet. Diese Kühlteilblechpakete 10 sind vollkommen fluiddicht ausgebildet und bestehen aus mindestens drei Kühlteilblechen 11. Die fluiddichten Kühlteilblechpakete 10 werden von einem Kühlfluid durchströmt und die Kühlteilblechpakete 10 sind einzeln oder untereinander mit einem Kühlmittelhauptzufluss 34 und einem Kühlmittelhauptabfluss 35 verbunden angeordnet.

## Beschreibung

Die Erfindung betrifft ein Kühlsystem für eine rotierende elektrische Maschine höchster Leistungsdichte mit Fluidkühlung in einem geschlossenen Kühlmittelkreislauf im Ständer und/oder im Läufer, bestehend aus zwei oder mehreren miteinander verbundenen Teilblechpaketen, wobei die Teilblechpakete voneinander beabstandet sind und der Läufer aus massiven Teilkörpern oder aus geblechten Läuferteilblechpaketen besteht.

Elektrische Maschinen führen normalerweise die beim Betrieb entstehende Wärme über die Maschinengehäuseoberfläche an die Umgebungsluft ab. Für hochausgenutzte Maschinen ist es allerdings erforderlich die Wärme mittels Flüssigkeitskühlung abzuleiten. Dazu werden in der Regel Kühlrohre im Gehäuse angeordnet. Das Eingießen von Kühlrohren in Gehäuse rotierender elektrischer Maschinen ist in einer Vielzahl von verschiedenen Anwendungen allgemeiner Stand der Technik. Allerdings ist das Eingießen ein energetisch aufwändiger und Arbeitszeit aufwändiger komplizierter Prozess.

So ist z. B. aus der DE 9107197 U1 eine flüssigkeitsgekühlte elektrische Maschine mit einem Maschinengehäuse aus Grauguss bekannt, in das eine wendelförmige Rohrschlange aus Stahlrohr eingegossen ist. Durch diese Rohrschlange strömt die Kühlflüssigkeit, wobei die Wärme, die aus dem in das Graugussgehäuse eingebautem Ständerblechpaket einschließlich der eingebauten Wicklung stammt, entsprechend über die Kühlflüssigkeit abgeleitet werden soll. Dabei ist an mindestens einem Lagerschild ein Zu- und Abführstutzen für die Kühlflüssigkeit vorgesehen. Diese Anordnung einer Rohrschlange von kreisförmigem Querschnitt und der Länge der gesamten Rohrschlange ist relativ instabil und bereitet beim Eingießen erhebliche gießtechnische Probleme. Zudem sind Gusswerkstoffe schlechter wärmeleitfähig.

Aus der DE 91 12 631 U1 ist es bekannt in den Lagerschilden einer flüssigkeitsgekühlten rotierenden elektrischen Maschine zusätzliche Überleitungskanäle anzuordnen. Diese sind dabei so großflächig ausgebildet, dass speziell geformte und mit Doppelwülsten und zusätzlichen Vorsprüngen versehene Dichtungen angeordnet werden müssen. Dabei sind sowohl am Maschinengehäuse als auch an den Lagerschilden zwecks Halterung der Abdichtung speziell angeordnete Vorsprünge ausgebildet. Die zusätzliche Dichtung umschließt die Kühlflüssigkeitsöffnungen konturenmäßig. Das Maschinengehäuse weist bei dieser Ausführung einen annähernd quadratischen Querschnitt auf. In den Eckbereichen des Maschinengehäuses sind dabei die eigentlichen Kühlkanäle ausgebildet. Dieser Lösung haftet der Nachteil an, dass bei dieser Maschinenkonstruktion jeweils nur in den Eckbereichen thermisch wirksame Kühlkanäle angeordnet sind.

Aus der DE 196 51 559 A1 ist eine weitere rotierende elektrische Maschine bekannt, bei der in eine Einheit aus Ständerblechpaket und darum gegossenes Gehäuse gleichzeitig eine das Ständerblechpaket umschließende Kühlrohrschlange eingegossen ist. Die Wendel der Kühlrohrschlange ist dabei vorzugsweise in den Gehäusemantel eingegossen. Das Ständergehäuse besteht hier aus Metall- oder Aluminiumguss. Die Kühlrohrschlange wird vor dem Gießen auf der Oberfläche des Ständerblechpakets positioniert und befestigt. Anschließend wird das Ständerblechpaket in eine Gussform eingebracht und vollständig umgossen. Allerdings besteht hier das Problem, dass diese Lösung nur für Aluminiumguss geeignet ist, da sich bei höheren Temperaturen wie zum Beispiel Grauguss das Ständerblechpaket zu sehr verformen kann. Aluminiumguss ist allerdings ein schlechter Wärmeleiter, so dass diese Maschine thermisch nicht so ausgenutzt werden kann.

Eine andere ähnliche Lösung ist in der DE 297 14 614 beschrieben, die allerdings für Grauguss geeignet sein soll. Damit die Instabilität der gewendelten Rohrschlange beseitigt wird, sind die einzelnen Wendeln gegeneinander mit zusätzlichen Stegen fixiert. Dies verbessert die Stabilität vor und während des Eingießens. Allerdings ist die Herstellung solch einer gewendelten Rohrschlange zur Realisierung einer solchen Mantelkühlung relativ kompliziert.

Die DE 4 229 395 A1 beschreibt eine Lösung mit Flüssigkeitskühlung für einen oberflächengekühlten Asynchronmotor mit zylindrischen metallischen Gehäusemantel. Dabei sind im Gehäusemantel achssymmetrisch Längskanäle angeordnet, die in Umfangsrichtung gleichmäßig verteilt angeordnet sind. Sie werden über Verbindungskanäle untereinander so verbunden, dass das Kühlmedium den Gehäusemantel mäanderförmig durchfließt. Allerdings sind die Kühlkanäle nur sehr aufwändig herstellbar. Wie beschrieben, werden die Längskanäle durch Längsbohrungen gebildet. Dies bedingt die Eignung dieser erfindungsgemäßen Lösung nur für Gehäusemäntel relativ kurzer Baulänge, da sich sehr lange Durchgangsbohrungen mit entsprechend geringen Bohrungsdurchmessern in der entsprechenden Genauigkeit nicht herstellen lassen. Zudem passiert es, dass da beim Bohren der Bohrer über die Länge zu stark verläuft. Außerdem ist das Ausbohren ein zeit- und kostenintensiver Prozess. Zudem dürfte es in Abhängigkeit vom metallischen Werkstoff des Gehäusemantels zu Dichtigkeitsproblemen kommen, wenn z. B. im Guss vorkommende Lunker angebohrt werden und Flüssigkeit eventuell unkontrolliert in das Innere der Maschine gelangen kann, was letztlich zum Ausfall solch einer Maschine führt.

Wie vorstehend beschrieben gibt es noch eine weitere Vielzahl von rotierenden elektrischen Maschinen, welche allein durch einen Wassermantel gekühlt werden. Mittels dieser Wassermantelkühlung kann im besten Fall eine zulässige Verlustleistung je Eisenpaketlänge von ca. 20 bis 25 W/mm erreicht werden. Allein mit Wassermantelkühlung ist daher eine sehr intensive Kühlung in den besonders thermisch hoch beanspruchten aktiven Bereichen einer rotierenden elektrischen Maschine nicht ausreichend realisierbar.

In der DE 199 17 420 A1 ist der Versuch gemacht worden eine intensive Kühlung im Ständerblechpaket in der Nähe der elektromagnetisch aktiven Bereiche zu erzielen, indem in den Eckbereichen eines quadratischen Ständerbleches Aussparungen angeordnet worden sind. Nach dem Setzen der Einzelbleche zum Ständerblechpaket entstehen in den Ecken des Ständerblechpakets axial verlaufende Kühlkanäle, die direkt von einem Kühlfluid durchflossen werden sollen. Diese axialen Kühlkanäle werden zunächst mit einem Dichtmittel beaufschlagt und gegenüber dem Maschineninneren abgedichtet. Allerdings ist es bei dieser Lösung ebenfalls bei längerem Betrieb auf Grund der auf das Ständerblechpaket wirkenden Kräfte zu Dichtigkeitsproblemen gekommen.

Eine deutliche Verbesserung ist mit der technischen Lösung gemäß DE 1 463 926 A1 mittels sogenannter Kühltaschen erreicht worden. Dabei besteht das Ständerblechpaket aus Teilblechpaketen. In den Teilblechpaketschlitzen zwischen den einzelnen Teilblechpaketen sind hier mehrere Kühltaschen angeordnet, die von einem Fluid durchströmt werden und die untereinander über Ringleitungen verbunden sind. Diese Lösung ist jedoch konstruktiv und auch fertigungstechnisch sehr aufwendig und eignet sich wirtschaftlich nur für sehr große elektrische Maschinen, wie aus der Beschreibung ersichtlich.

Eine weitere Lösung zur Steigerung der zulässigen Verlustdichte wurde mit der technischen Lösung gemäß der DE 2 917 717 C2 vorgeschlagen. Hier wird durch spezielle gefräste Kühlkanalnuten, die in einzelnen Blechsegmenten (als Kühlsegmente bezeichnet) angeordnet sind, eine intensive Kühlwirkung erreicht. Mehrere dieser Kühlsegmente sind verteilt zwischen den Ständerteilblechpaketen eines Turbogenerators angeordnet. Zusätzlich sind an den Kühlsegmenten Anschluss - und Verteilerkopfstücke angeordnet, mittels derer die Flüssigkeitszufuhr und - Kühlflüssigkeitsabführung gewährleistet wird. Jedoch ist auch diese technische Lösung technologisch sehr aufwändig und ebenfalls nur für sehr große rotierende Maschinen, wie z. B. Turbogeneratoren geeignet.

Durchzugsbelüftete intensiv gekühlte elektrische Maschinen erreichen die bisher höchsten Verlustdichten. Das Verhältnis von zulässiger Verlustleistung zu Eisenpaketlänge liegt hier sogar zwischen 20... 35W/mm je nach Maschinengröße und realisierten Kühlsystem. Durch DE102006049188B3 werden auch auf die Eisenpaketlängen bezogene Verluste bis 70 W/mm sicher beherrscht. Jedoch haben durchzugsbelüftete Maschinen den Nachteil, relativ große Querschnitte für die Luftführung und damit zusätzlichen Bauraum zu benötigen. Dies führt zu jeweils größeren Achshöhen der entsprechend so gekühlten elektrischen Maschinen. Auch ist für das Überwinden des relativ hohen Strömungsdruckes ein zumeist sehr leistungsfähiges Gebläse oder ein größerer Eigenlüfter erforderlich. Diese beanspruchen ebenfalls Bauraum und eine zusätzliche Leistungsversorgung. Für die Ausführung einer möglichst kompakten und leichten Maschine ist eine reine Durchzugsbelüftung damit, wie in dieser Lösung beschrieben, ungeeignet.

Ein anderes universelles Kühlsystem mit Durchzugskühlung ist in der DE 10 2006 049 188 B3 beschrieben. Hierbei handelt es sich ebenfalls um ein Kühlsystem für hochausgenutzte rotierende elektrische Maschinen, mit einem Ständer- und Läuferblechpaket bestehend aus Teilblechpaketen. Dabei besteht das Ständer- und Läuferblechpaket jeweils aus mehren gleichlangen Teilblechpaketen. Die Teilblechpakete sind mit Leiteinrichtungs- und Abstandshaltersegmenten voneinander beabstandet angeordnet. Im Rücken des Ständerblechpaketes sind hier axiale Zuströmkanäle und axiale Abströmkanäle über den Umfang verteilt angeordnet. Die Abströmkanäle sind beidseitig verschlossen ausgeführt. Die Anzahl der nach innen gerichteten Stege der Leiteinrichtungs- und Abstandshaltersegmente ist entsprechend der Anzahl der Zuströmkanäle und Abströmkanäle ausgebildet. Es sind Ständerteilblechpakete mit geschlossenen Kanälen mit Ständerteilblechpaketen mit offenen und geschlossenen Kanälen so kombiniert angeordnet, dass jeweils die geschlossenen Kanalabschnitte fortlaufend Zuströmkanäle und Abströmkanäle bilden. Bei Gehäuseausführung des Kühlsystems sind im Gehäuse an den Stellen des Ständerteilblechpaketes, wo sich die offenen Kanäle befinden, radiale Gehäuseausströmöffnungen angeordnet. Diese Bauweise verlangt allerdings einen hohen fertigungstechnischen Aufwand und ist kühltechnisch nur für bestimmte Maschinenausführungen geeignet.

Der Erfindung liegt die Aufgabe zugrunde ein Kühlsystem für eine rotierende elektrische Maschine mittlerer Leistung und mit höchster Leistungsdichte mit Fluidkühlung zu schaffen, welche sich durch eine kompakte und leichte Bauweise auszeichnet, wobei die Maschine aus zwei oder mehreren miteinander verbundenen Teilblechpaketen besteht, und dass ein geschlossener Kühlmittelkreislauf im Ständer und/oder im Läufer ermöglicht wird, wobei dass erwärmte Kühlmedium so schnell als möglich aus der Maschine abgeführt werden soll, eine konstante Temperaturverteilung über der gesamten axialen Länge der Maschine gewährleistet ist, eine deutlich höhere thermischen Belastung von bis zu 70W/mm erreichbar ist und wobei ein minimales Gewicht je kW-Wellenleistung erreicht werden soll.

Die Aufgabe der Erfindung wird durch die Merkmale des 1. Patentanspruchs gelöst. Weitere zweckmäßige Ausgestaltungen der Erfindung sind Gegenstand der rückbezüglichen Unteransprüche. Das neuartige erfindungsgemäße Kühlsystem für eine rotierende elektrische Maschine höchster Leistungsdichte basiert auf einer Fluidkühlung mit einem geschlossenen Kühlmittelkreislauf im Ständer und/oder im Läufer. Der Ständer besteht dabei aus mindestens zwei oder mehreren miteinander in bekannter Art und Weise verbundenen Teilblechpaketen, wobei die Teilblechpakete voneinander definiert beabstandet sind. Der Läufer kann entweder aus einem oder auch aus mehreren voneinander definiert beabstandeten massiven Teilkörpern oder auch aus geblechten Läuferteilblechpaketen bestehen. Zwischen den Ständerteilblechpaketen 2 und/oder den Läuferteilpaketen (bei massiven Läuferkörpern) und/oder Läuferteilblechpaketen 4 sind neuartige fluiddichte Kühlteilblechpakete 10 angeordnet. Diese Kühlteilblechpakete 10 sind vollkommen fluiddicht ausgebildet und bestehen aus mindestens drei Kühlteilblechen 11. Die fluiddichten Kühlteilblechpakete 10 werden von einem Kühlfluid durchströmt und die Kühlteilblechpakete 10 sind einzeln oder untereinander mit einem Kühlmittelhauptzufluss 35 und einem Kühlmittelhauptabfluss 36 verbunden angeordnet.

Durch das neuartige Kühlsystem ist es erstmals möglich zwischen den Ständerteilblechpaketen 2 und/oder Läuferteilpaketen oder Läuferteilblechpaketen 4 eine voll wirksame Kühlung nicht nur des passiven Eisenkreises, sondern auch im Bereich des Entstehens der Verlustwärme am aktiven Material, d. h. der Wicklung zu realisieren, da die Wicklung von den Nutteilen der fluiddichten Kühlteilblechpakete 10 analog umfasst ist. Dadurch kann die entstehende Wärme aus der Wicklung auf sehr kurzem Weg in das Kühlfluid abgeleitet werden. Das neuartige Kühlsystem ist besonders zur Kühlung von Ständerblechpaketen für rotierende gehäuselose elektrische Maschinen geeignet. Es kann jedoch auch genauso zur Kühlung von Läuferteilpaket (bei massiven Läuferkörpern) oder Läuferteilblechpaketen verwendet werden. Hierfür ist dann entsprechend eine bestimmte Anzahl von axialen Kanälen im Läuferjochbereich vorzusehen. Des Weiteren ist es möglich durch dieses Kühlsystem die Maschine bei gleicher Leistung eine Achshöhe kleiner zu bauen, was zu einem günstigen Masse-Oberflächenverhältnis führt. Auch bei großen axialen Baulängen zum Beispiel bei speziellen Induktionsmotoren entsteht kein axialer Temperaturanstieg über die gesamte Länge des Ständers der Maschine betrachtet. Durch die im Inneren des erfindungsgemäßen Kühlsystems realisierte große Oberfläche ist eine sehr gute Wärmeabführung aus den aktiven Bereichen über die Kühlteilblechpakete 10 möglich.

Bevorzugt besteht das fluiddichte Kühlteilblechpaket 10 des neuartigen Kühlsystems für eine rotierende elektrische Maschine höchster Leistungsdichte aus vier Kühlteilblechen 11. Dabei ist jeweils links und rechts außen je ein Begrenzungsblech 12 und innen zwei Kühlmittelleitbleche 13 angeordnet und miteinander verbunden. Es ist aber auch prinzipiell möglich in Abhängigkeit z. B. von der Größe der rotierenden elektrischen Maschine innen drei oder noch mehr Kühlmittelleitbleche 13 anzuordnen und dieses Kühlteilblechpaket 10 dann fluiddicht zu verbinden. Zum Erreichen eines geschlossenen Kreislaufs innen in den Kühlmittelleitblechen 13 werden verschieden ausgeschnittene Bleche formschlüssig miteinander verbunden. Diese Kühlmittelleitbleche 13 mit einer speziell ausgebildeten Innenkontur können wahlweise durch Fräsen Stanzen, Lasern oder Erodieren aus einer entsprechenden Blechtafel herausgetrennt werden. Diese Innenkontur dient dabei der Führung eines eingesetzten Kühlfluids.

Eine besonders gute Wärmeausleitung aus den aktiven Bereichen beim erfindungsgemäßen Kühlsystem wird erreicht, wenn die fluiddichten Kühlteilblechpakete 10 im Ständer 1 und/oder im Läufer 3 die gleiche Innerkontur, wie Zähne, Nuten und/oder Aussparungen aufweisen, wie die Ständerteilblechpakete 2 und/oder Läuferteilpakete oder Läuferteilblechpakete 4.

Wenn beim Kühlsystem für eine rotierende elektrische Maschine höchster Leistungsdichte die fluiddichten Kühlteilblechpakete 10 aus zwei Begrenzungsblechen 12 und ein, zwei oder mehreren Kühlmittelleitblechen 13 bestehen sind die Kühlmittelteilblechpakete jeweils mit mindestens einem Anschluss zur Fluidzufuhr und gleichfalls wieder zur Fluidabfuhr ausgebildet. Der Anschluss kann in einfacher Art und Weise über axial oder radial angeordnete Hohlschrauben mit bekannten Hydraulikleitungen erfolgen.

Bevorzugt sind beim neuartigen Kühlsystem für eine rotierende elektrische Maschine höchster Leistungsdichte die Kühlteilbleche 11 des fluiddichten Kühlteilblechpakets 10 untereinander Leistungsdichte die Kühlteilbleche 11 des fluiddichten Kühlteilblechpakets 10 untereinander mittels einer Löt-, Schweiß-, Kleb- und/oder Pressverbindung abdichtend verbunden. Das Verbinden der vier oder auch von mehreren Kühlteilblechen 11 zu einem fluiddichten Kühlteilblechpaket 10 erfolgt mit einem speziellen Fügeprozess wie z. B. mittels Kleben, Löten oder Schweißen oder Pressen. Bei Bedarf ist es auch denkbar zusätzliche Dichtungen zwischen den Kühlteilblechen 11 einzulegen. Als Möglichkeit sei hier das Verlöten von Kühlteilblechen 11 aus Aluminium genannt, welche durch ein Plasma-Beschichtungsverfahren über Vermittlerschichten untereinander lötbar verbunden werden können, wobei das Kühlteilblechpaket 10 gleichzeitig insgesamt fluiddicht ausgebildet werden kann. Hierdurch entsteht eine gute Wärmeleitung der Kühlteilbleche 11 untereinander.

In einer besonders vorteilhaften Ausführung der Kühlmittelleitbleche 13 für das Kühlsystem ist an einer oder mehreren Stellen der Strömungsquerschnitt der fluiddichten Kühlmittelleitbleche 13 durch entsprechend dimensionierte Engstellen zur Volumenstromsymmetrie 23 verengt ausgebildet. Durch diese Engstellen wird der Strom des Kühlfluides auf eine bestimmte Menge pro Zeiteinheit reduziert und gleichzeitig wird der Kühlfluidstrom symmetrisch in den Kühlteilblechpaketen 10 so geführt, dass eine sehr gleichmäßige und konstante Temperaturverteilung im Kreisring entsteht.

Wenn das erfindungsgemäße Kühlsystem für eine rotierende elektrische Maschine auch im Läufer angeordnet ist, sind die fluiddichten Kühlteilblechpakete 10 durch ein, zwei oder mehrere axial im Läuferteilpaket oder im Läuferteilblechpaket 4 angeordnete Läuferkühlverbindungsrohre 18 untereinander verbunden und werden über diese mit einem Kühlfluid beaufschlagt. Dabei ist das bzw. sind die Läuferkühlverbindungsrohre 18 mit Läuferkühlkanälen 19 mit einem Läuferkühlmittelhauptabfluss 37 und über einen Läuferhohlwellenkanal 20 mit einem Läuferkühlmittelhauptzufluss 38 so verbunden, dass jedes einzelne Kühlteilblechpaket 10 einzeln getrennt von den anderen mit noch kühlen Kühlfluid versorgt wird und aus jedem einzelnen Kühlteilblechpaket 10 das erwärmte Kühlfluid auch einzeln getrennt von den anderen über Läuferkühlverbindungsrohre 18, die radial verteilt im Läufer 3 angeordnet sind, abgeführt wird.

Beim fluiddichten Kühlteilblechpaket 10 des Kühlsystems bestehen die Kühlteilbleche 11, d. h. die Begrenzungsbleche 12 und/oder die Kühlmittelleitbleche 13 aus Aluminium, oder Kupfer, oder aus Elektroblech oder aus Dichtungswerkstoffen oder gegebenenfalls auch aus einer Kombination dieser Werkstoffe. Die Kühlteilbleche 11 können hierbei auch aus dem gleichen Elektroblech wie die Blechpakete oder auch aus elektrisch und thermisch leitfähigeren Materialien oder allein aus Dichtungsmaterialien bestehen. Insbesondere eignen sich hier relativ leichte Werkstoffe, wie Aluminium. Es ist auch möglich zwischen den einzelnen Kühlteilblechen 11 des Kühlteilblechpaketes 10 zum Beispiel außen am Umfang in Randnähe und innen im Bereich der Durchführungen, wie z. B. für die Zuganker vorgefertigte (ausgestanzte) Dichtungen aus geeigneten handelsüblichen Dichtungsmaterialien einzulegen um für die sehr lange währende Lebensdauer solcherart ausgebildeter rotierender elektrischer Maschinen die Fluiddichtigkeit zuverlässig zu gewährleisten.

Um das Kühlsystem für eine rotierende elektrische Maschine höchster Leistungsdichte optimal mit einem Kühlfluid zu versorgen, sind die fluiddichten Kühlteilblechpakete 10 außerhalb des Ständers 1 oder innerhalb des Ständers 1 mittels Ständerkühlverbindungsrohren 17 mit einem Kühlmittelhauptverteiler 33 und einem Kühlmittelhauptsammler 34 verbunden. An diesen ist dann ein Kühlmittelhauptzufluss 35 bzw. ein Kühlmittelhauptabfluss 36 mit entsprechendem Rohrquerschnitt angeordnet. Analog ist im Läufer dann bei Anwendung des erfindungsgemäßen Kühlsystems auch im Läufer an der Läuferwelle 7 je ein Läuferkühlmittelhauptzufluss 38 bzw. ein Läuferkühlmittelhauptabfluss 37 angeordnet.

Eine besonders effektive Kühlung mittels des erfindungsgemäßen Kühlsystems kann erreicht werden, wenn das Kühlteilblechpaket 10 aus mindestens fünfKühlteilblechen 11 besteht. Dabei ist links und rechts außen das Kühlteilblechpaket 10 mit mindestens zwei Begrenzungsblechen 12 gegenüber den anliegenden Teilblechpaketen begrenzt und abgedichtet. Weiter innen sind links und rechts mindestens zwei speziell gestaltete Kühlmittelleitbleche 13 und mindestens mittig ein Axialleitblech 39 untereinander flüssigkeitsdicht verbunden. Dabei ist ein System von untereinander verbundenen Kühlmittelleitblechfenstern zur Kühlmittelführung 14 realisiert, wobei speziell geformte darauf abgestimmten Öffnungen 42, wieder darauf abgestimmte Anordnungen von Langlöchern 41 und damit verbunden angeordnete Teilkanäle 43 und Bohrungen 40 so angeordnet sind, dass im Kreisring im Inneren des Kühlteilblechpaketes 10 eine kreisbogenförmige, radiale und axiale Zwangsführung eines zugeführten Kühlmediums vom Ständeranschlussstutzen für den Zulauf 15 bis in die Zahnköpfe des Kühlteilblechpaketes 10 und wieder zurück bis zum Ständeranschlussstutzen für den Ablauf 16 erfolgt. Die Kühlmittelleitbleche 13 und das Axialblech 39 können allerdings auch mehrfach angeordnet werden. Gleichfalls sind zum Beispiel anstelle je eines dickeren Begrenzungsbleches 12 auch mehrere dünnere Begrenzungsbleche 12 einsetzbar. Mittels dieses Systems wird der Kühlmittelstrom, der axial zugeführt wird, in dem einen (z. B. links vom Axialleitblech 39 angeordneten) Kühlmittelleitblech 13 und mittels des Axialleitblechs 39, erst radial nach Innen geführt, dann kreisbogenförmig entlang des äußeren Umfangs des Kühlteilblechpakets 13 mittels der Kühlmittelleitblechfensters zur Kühlmittelführung 14 in Verbindung mit den Öffnungen 42 verteilt, dann radial nach Innen geführt, dann axial und radial nach Innen mittels der Langlöcher 41 umgelenkt, dann um den Nutgrund mittels der Teilkanäle 43 geführt, strömt dann radial nach innen bis in die Zahnköpfe, wird dann mittels der Bohrungen 40 des Axialleitblechs 39 axial umgelenkt, dann wieder radial nach außen mittels der Teilkanäle 41 des anderen (z. B. rechts vom Axialleitblech 39 angeordneten) Kühlmittelleitblechs 13 geführt, dann erneut entlang des Nutgrundes, dann radial nach außen geführt, strömt axial und dann radial nach außen mittels anderer Langlöcher 41 des Axialleitblechs 39, wird wieder kreisbogenförmig mittels der Kühlmittelleitblechfenstern zur Kühlmittelführung 14 des zweiten Kühlmittelleitblechs 13 umgelenkt und geführt und strömt dann radial nach außen, um wieder Axial abgeleitet zu werden.

Für rotierende elektrische Maschinen höchster Leistungsdichte mit lang bauenden Blechpaketen ist das von Vorteil, wenn das Kühlsystem so ausgebildet ist, dass die Breite der einzelnen Kühlteilblechpakete 10 variiert werden kann. Vor allem in der Mitte werden solche Maschinen besonders warm. Diese Wärme kann gut abgeleitet werden, wenn das in der Maschinenmitte angeordnete Kühlteilblechpaket 10 breiter ausgebildet ist. Es ist auch möglich von den Maschinenenden zur Mitte hin die Kühlteilblechpakete 10 des Ständerblechpaketes 2 und/oder Läuferblechpaketes 4 jeweils immer breiter werden zu lassen, wodurch mehr Kühlffluid durch diese Kühlteilblechpakete durchströmen kann und dadurch die Kühlung zur Maschinenmitte diese Kühlteilblechpakete durchströmen kann und dadurch die Kühlung zur Maschinenmitte hin immer effektiver wird. Dadurch können thermische Unsymmetrien, über die gesamte Länge des Blechpaketes betrachtet, zuverlässig vermieden werden.

In einer besonderen Variante des erfindungsgemäßen Kühlsystems für eine rotierende elektrische Maschine höchster Leistungsdichte sind pro Kühlteilblech 11 einseitig nach Innen gerichtet mindestens zwei Dichtungsnuten 44 ausgespart und angeordnet. Dabei ist der Durchmesser der kreisringartigen inneren Dichtungsnut 45 kleiner als der Durchmesser des Kreisrings in dem die Kühlmittelleitblechfenster zur Kühlmittelführung 14 angeordnet sind. Der Durchmesser der äußeren Dichtungsnut 46 ist größer als der Durchmesser des Kreisrings in dem die Kühlmittelleitblechfenster zur Kühlmittelführung 14 angeordnet sind, wobei diese Dichtungsnut 46 der Außenkontur des jeweils betreffenden Kühlteilbleches 11 entlang folgt und von dessen Rand nur geringfügig beabstandet ausgespart und angeordnet ist. In diese Dichtungsnuten 44 sind jeweils 0-Ringe eingelegt, so dass das Kühlteilblechpaket 10 in seinem Inneren zusätzlich durch diese 0-Ringdichtungen abgedichtet ist. Bei Bedarf kann der Kleber zwischen den Oberflächen der Kühlteilbleche 11 gegebenenfalls auch weggelassen werden. Diese Lösung ist zwar fertigungstechnisch etwas aufwändiger, ist aber auch unter schwierigsten Bedingungen einsetzbar und erzeugt eine dauerhafte Dichtigkeit auch unabhängig von den jeweiligen Einsatzorten einer solcherart ausgebildeten elektrischen Maschine. Durch den möglichen Wegfall des Klebers zwischen den einzelnen Kühlteilblechen 11 verbessert sich der Wärmeübergang zwischen den Kühlteilblechen 11. Außerdem kann in diesem Fall der Querschnitt der Kühlmittelteilblechfenster 14 erheblich vergrößert werden. Damit erhöht sich der Strömungsquerschnitt und der Kühlmitteldurchsatz kann ebenfalls weiter verbessert werden. Darüber hinaus ist dadurch eine klassische Stanzform der Kühlmittelteilblechfenster 14, wie bei durchzugsbelüfteten elektrischen Maschinen an sich üblich, in einfacher Art und Weise realisierbar. Im Prinzip können die Dichtungsnuten 44 auch auf beiden Seiten der Kühlteilbleche 14 ausgespart und angeordnet werden, wobei die Durchmesser dann auf der Vorder- und Rückseite unterschiedlich sein sollten, damit sich die jeweils inneren oder äußeren Dichtungsnuten 45 und 46 nicht symmetrisch gegenüberliegen und damit eine ausreichende Dicke der Kühlteilbleche 14 an diesen Stellen erhalten bleibt.

Das erfindungsgemäße Kühlsystem soll nachstehend in einem Ausführungsbeispiel an Hand der Figuren 1 bis 8 näher erläutert werden.
- Figur 1: zeigt fünf Kühlteilbleche 11 in bevorzugter Ausführung, davon zwei Begrenzungsbleche 12 und drei Kühlmittelleitbleche 13 für ein Kühlteilblechpaket 10 für einen Ständer 1
- Figur 2: zeigt ein Kühlteilblechpaket 10 in einer zweiten Ausführung mit zwei identischen gegeneinander verdreht und versetzt geschichteten Kühlmittelleitblechen 13 mit einer dem Ständerblechpaket 2 identischer Kontur im Nut und Zahnbereich
- Figur 3: zeigt ein erfindungsgemäßes Kühlsystem für eine rotierende elektrische Maschine mit Anordnung mehrerer Kühlteilblechpakete 10 in einem Ständer 1
- Figur 4: zeigt die Anordnung der Kühlteilblechpakete 10 im Ständer 1 und eine mögliche Anordnung zur Verteilung der Kühlmittelzufuhr und Kühlmittelabfuhr auf dem Grundkörper eines Ständers 1
- Figur 5: zeigt das Innere eines Kühlteilblechpakets 10 für den Läufer 3 mit zwei identisch ausgebildeten und verdreht geschichteten Kühlmittelleitblechen 13
- Figur 6: zeigt die Anordnung mehrerer Kühlteilblechpakete 10 und deren Anschlussgestaltung im Läufer 3 und eine Gesamtdarstellung des erfindungsgemäßen Kühlsystems im Ständer 1 und Läufer 3
- Figur 7: zeigt eine Kühlteilblech 11, welches als Begrenzungsblech 12 ausgeführt ist
- Figur 8: zeigt eine Kühlteilblech 11, welches als Kühlmittelleitblech 13 ausgeführt ist und einen Schnitt der einen Querschnitt durch ein Kühlteilblechpaket 10 mit den Dichtungsnuten 44 in denen 0-Ringe eingelegt sind

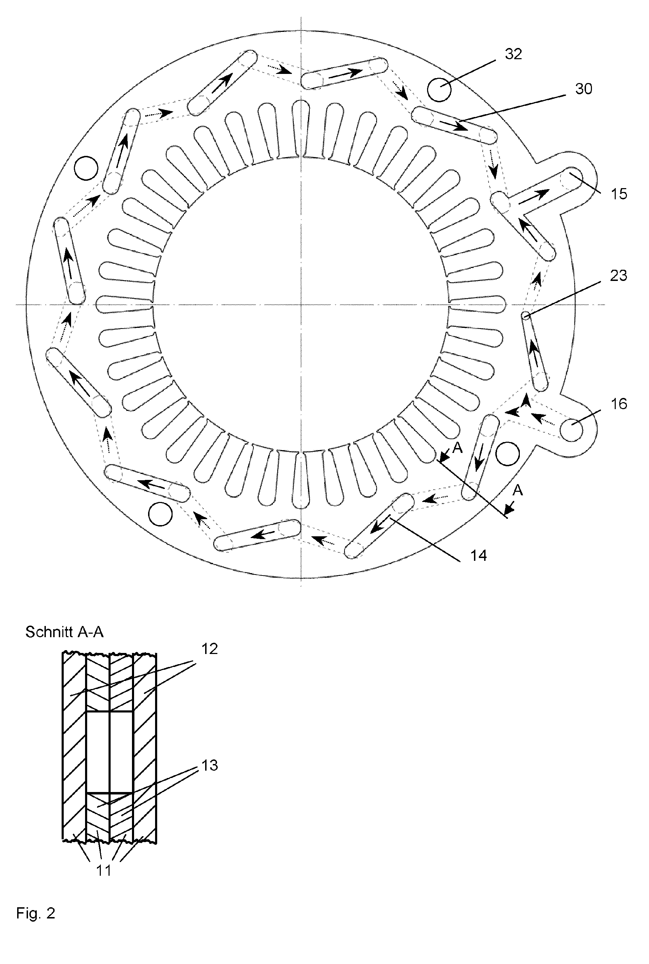

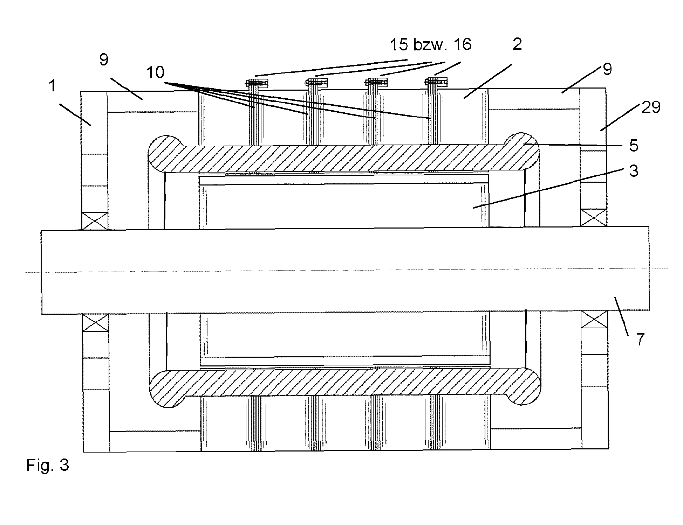

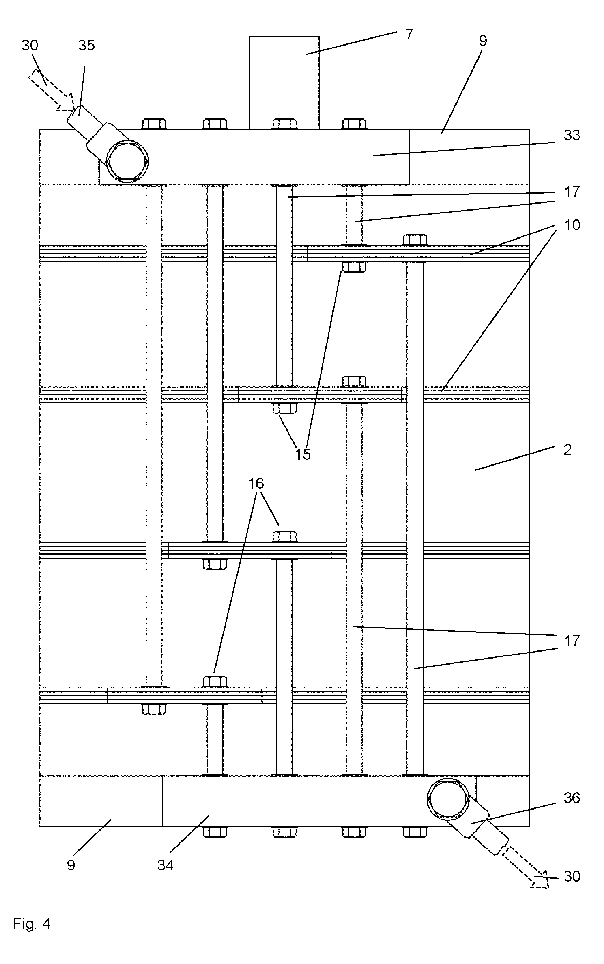

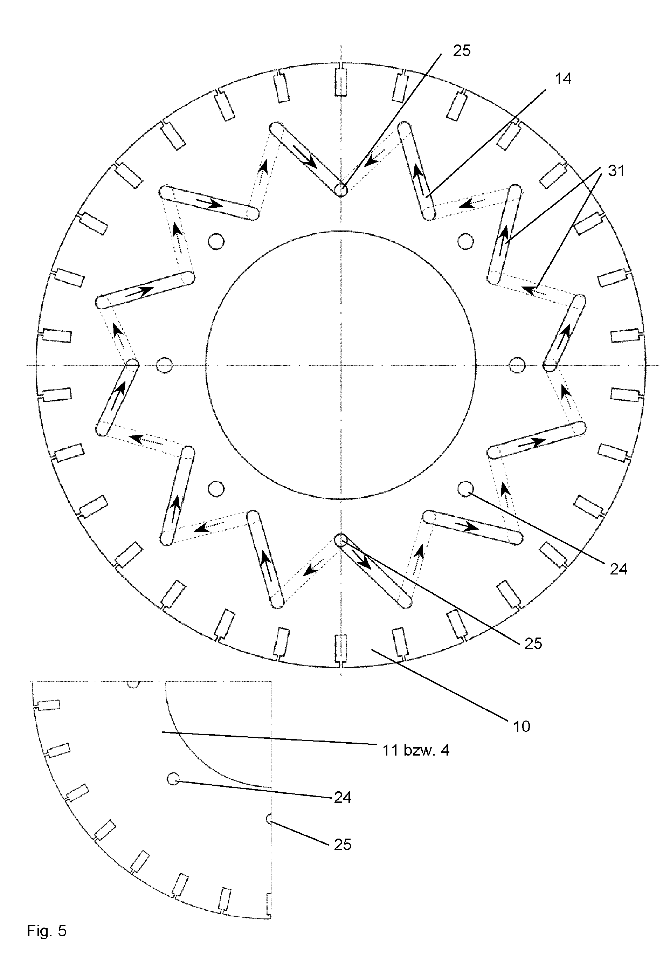

Die ersten vier Figuren zeigen ein Ausführungsbeispiel für ein erfindungsgemäßes Kühlsystem für eine rotierende elektrische Maschine höchster Leistungsdichte, mit Fluidkühlung und einem geschlossenen Kühlmittelkreislauf im Ständer 1, der hier aus fünf mit Zugankern verbundenen voneinander beabstandeten Ständerteilblechpaketen 2 besteht. Zwischen den Ständerteilblechpaketen 2 ist je ein Kühlteilblechpaket 10 (hier im Beispiel daher insgesamt vier in dieser rotierenden elektrischen Maschine) angeordnet, wie aus Figur 3 ersichtlich. In Figur 4 ist dargestellt wie die Verteilung der Kühlmittelzufuhr und Kühlmittelabfuhr erfolgt. Die Kühlmittelzufuhr erfolgt auf einer Maschinenseite über einen zentralen Kühlmittelhauptzufluss 35 in einen nachgekoppelten Kühlmittelhauptverteiler 33. An diesen auf dem Ständerblechpaket 2 angeordneten Kühlmittelhauptverteiler 33 sind vier Ständerkühlverbindungsrohre 17 angeschlossen, wobei jedes einzelne davon so lang ausgebildet ist, dass es jeweils eine Verbindung zu einem Ständeranschlussstutzen für den Zulauf 15 eines Kühlteilblechpakets 10 herstellt. Innerhalb jedes der vier Kühlmittelteilblechpakte 10 wird das Kühlmittel in deren Inneren sowohl radial verteilt als auch nach innen geführt, umgelenkt nach außen geführt und verlässt die Kühlteilblechpakete 10 über die Ständeranschlussstutzen für den Ablauf 16. Die Kühlmittelabfuhr des erwärmten Kühlmittels erfolgt aus dem Kühlteilblechpaket 10 über einzelne weitere Ständerkühlverbindungsrohre 17, die auf der anderen gegenüberliegenden Maschinenseite mit einem Kühlmittelhauptsammler 34 verbunden sind. Aus diesem Kühlmittelhauptsammler 34 wird das erwärmte Kühlmedium über den Kühlmittelhauptabfluss 36 abgeleitet. Hier beginnt bereits eine Rückkühlung des erwärmten Kühlmittels über die Umgebungsluft welche die Oberfläche des Ständerblechpaketes 2 und die darüber angeordneten Ständerkühlverbindungsrohre 17 umströmt. Der Kühlmittelhauptverteiler 33 und der Kühlmittelhauptsammler 34 können auch jeweils in den Lagerschilden integriert ausgebildet und angeordnet sein. Figur 2 zeigt zwei Kühlmittelleitbleche für das Innere eines Kühlteilblechpakets 10 mit zwei identisch ausgebildeten gegeneinander verdreht und versetzt geschichteten Kühlmittelleitblechen 13, welche eine mit dem Ständerblechpaket 2 identische Kontur im Nut und Zahnbereich besitzen. Eine analoge Ausführung zeigt Figur 5, wo das Innere eines Kühlteilblechpakets 10 für den Läufer 3 einer Induktionsmaschine abgebildet ist. Dabei sind ebenfalls zwei identisch ausgebildete und verdreht geschichtete Kühlmittelleitbleche 13 mit identischer Kontur im Nut und Zahnbereich des Läuferblechpaketes 4 gezeigt. Hierdurch lässt sich das Läuferblechpaket 4 in ähnlicher Weise, wie bei konventionellen Maschinen problemlos setzen. Die Kühlteilblechpakete 10 des Läufers werden über spezielle Läuferanschlussstutzen 25 mit den einzelnen Läuferkühlverbindungsrohren 18 an das Kühlsystem der elektrischen Maschine, wie weiter hinten ausgeführt, angeschlossen. Der Vorteil dieser Ausführungen besteht darin, dass alle Kühlmittelleitbleche 13 in der Maschine identisch ausgebildet werden können und deshalb mit einem einzigen Blechschnitt herstellbar sind. Die Blechdicke kann dabei z. B. in einem Bereich von 0,35 bis 5 mm liegen. Indem man die Anzahl der einzelnen versetzt geschichteten Kühlmittelleitbleche 13 entsprechend nach oben verändert, kann man die Breite des Kühlmitteilpaketes 10 nahezu stufenlos beliebig erhöhen. Die Breite kann dann in beliebig vielen Schritten (Blechdickeschritten) variiert werden. Es ist prinzipiell aber auch möglich die Blechdicke der einzelnen Kühlmittelleitbleche 13 zu variieren und damit die Breite des Kühlteilblechpakets 10 in noch feineren Abstufungen zu verändern. In Figur 2 strömt das Kühlfluid bzw. das Kühlmittel über den Ständeranschlussstutzen für den Zulauf 15 zu, wird umgelenkt und strömt nach Innen. Dann verteilt es sich durch die einzelnen Kühlmittelleitblechfenster zur Kühlmittelführung 14, welche durch das versetzte Schichten einen zickzackartigen radial umlaufenden Ringkanal bilden. Da das Kühlmittel nach beiden Richtungen abfließen kann, ist in Richtung der kurzen Strecke zum Ständeranschlussstutzen für den Ablauf 15 hin, eine Engstelle zur Ausbildung einer Volumenstromsymmetrie 23 angeordnet, damit radial eine gleichmäßige Wärmeabführung möglich ist und keine thermischen Unsymmetrien entstehen. Diese Engstelle zur Volumenstromsymmetrie 23 kann weggelassen werden, wenn in einem Sonderfall dem Standeranschlussstutzen für den Zulauf 15 genau gegenüber um 180 Grad versetzt der Ständeranschlussstutzen für den Ablauf 16 angeordnet ist. Dann würde sich der Kühlmittelstrom genau hälftig aufteilen. Dies ist aber bei der Herstellung der gesamten Maschine relativ aufwändig, weswegen dieser Sonderfall fertigungsmäßig eher keine Bedeutung erlangen dürfte. In den Kühlmittelleitblechen 13 sind hier noch die Bohrungen für die Einbringung der Zuganker 32 ersichtlich. Durch diese Bohrungen 32 wird das gesamte geschichtete Ständerblechpaket 2 einschließlich der Kühlteilblechpakete 10 zu einem massiven Blechpaket mittels der Pressrahmen 9 über eingebrachte Zuganker (nicht gezeichnet) zusammengepresst, um dann wie bekannt, auf dem Ständerrücken die Einzelbleche des gesamten Blechpaketes und diese auch mit den Pressrahmen 9 mit mehreren auf den Umfang verteilt angeordneten Schweißnähten zu verschweißen. Dadurch wird sowohl die mechanische Festigkeit der gehäuselosen rotierenden elektrischen Maschine als auch die Dichtigkeit der Kühlteilblechpakete 10 dauerhaft hergestellt. Der Schnitt A-A zeigt nochmals einen Querschnitt durch vier Kühlteilbleche 11 (zwei Begrenzungsbleche 12 und zwei Kühlmittelleitbleche 13) in zusammengesetzter Form als Ausschnitt an der Stelle, wo die Kühlflüssigkeit von einem Kühlleitblech 13 zum anderen Kühlleitblech 13 durchfließen kann.

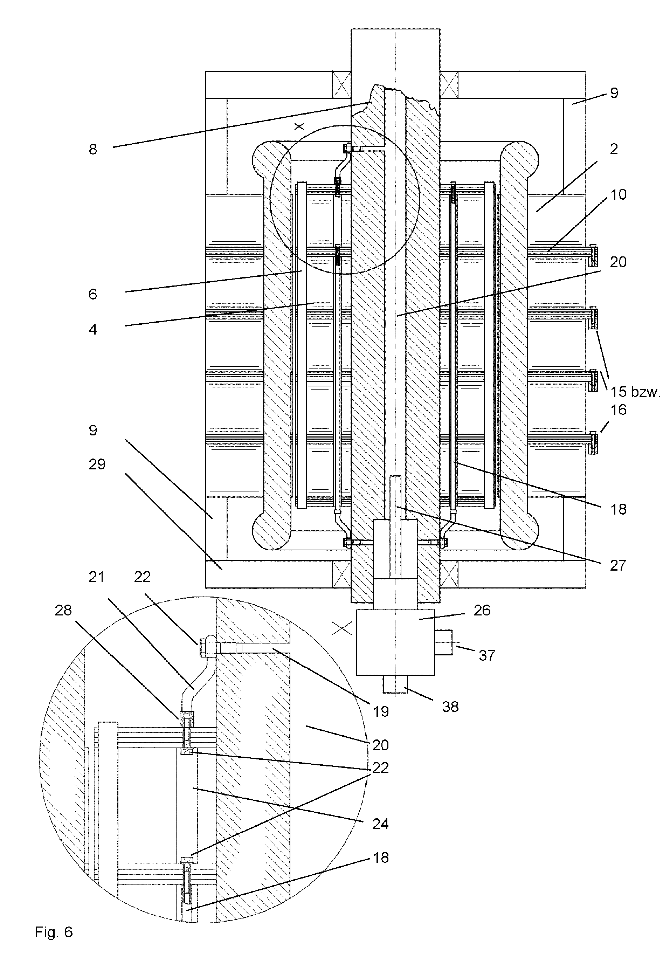

Figur 6 zeigt eine Induktionsmaschine mit einem erfindungsgemäßen Kühlsystem mit Kühlteilblechpaketen 10 sowohl im Ständer 1 als auch im Läufer 3. Hier wird ebenfalls ersichtlich, dass vor allem das Zu- und Abführen des Kühlmediums in Läufer 3 durch dessen Rotation und die erheblich beengten Platzverhältnisse sehr schwierig ist. Die Versorgung mit dem Kühlmedium erfolgt hier über axiale Läuferkühlverbindungsrohre 18, welche mittels Schraub- Löt- oder Schweißverbindungen jeweils an einem Kühlmittelteilblechpaket 10 befestigt sind. Die Kühlmittelleitbleche 13 weisen Anschlussbohrungen auf, welche kleiner sind als die Aussparungen für die axialen Läuferkühlverbindungsrohre 18 im Läuferblechpaket 3. Durch diese Aussparungen werden die Läuferkühlverbindungsrohre 18 ohne eine Verbindung hindurchgeführt, während über die Anschlussbohrungen das Kühlmedium in oder aus dem Kühlmittelteilblechpaket in die Läuferkühlverbindungsrohre 18 geleitet wird. Gemäß Figur 5 wird auch hier ein einfacher Blechschnitt für das Läuferblechpaket 4 vorgeschlagen, welcher wiederum aus zwei Deckblechen und zwei identischen Kühlmittelleitblechen 13 besteht. Nach dem Setzen erfolgt wiederum das Verfestigen durch Schrauben, Kleben, Löten, Schweißen oder Pressen. Es ist auch hier möglich zusätzliche Dichtungen mit zwischen zulegen um die Fluiddichtigkeit dauerhaft über die gesamte Lebensdauer einer solchen Maschine gewährleisten zu können. Wahlweise kann pro Kühlteilblechpaket 13 im Läufer ebenfalls ein Läuferkühlverbindungsrohr 18 angeordnet sein. In Figur 6 ist eine Ausführung gezeigt, wo jedes einzelne fluiddichte Kühlteilblechpaket 10 gesondert mit einem Läuferkühlverbindungsrohr 18 mit dem kühlen Kühlfluid beaufschlagt ist, d. h. es sind sechs Läuferkühlverbindungsrohre 18 zur Kühlfluidzuführung ausgebildet. Diese sind in der Regel kreisringartig auf einem bestimmten Radius radial verteilt im Läufer 3 angeordnet. Dabei ist z. B. das oberste Kühlteilblechpaket 10 des Läufers 3 direkt mittels einer Hohlschraube 22, über ein dehnbares Kupplungs- und Verbindungsstück 28 an das Läuferanschlusselement 21 angekuppelt und wird so über den Läuferhohlwellenkanal 20 und den Läuferkühlkanal 19 mit Kühlfluid beaufschlagt. Das Läuferanschlusselement 21 ist ebenfalls über eine Hohlschraube 22 mit dem Läuferkühlkanal 19 verbunden. Das zweite von oben aus in Figur 6 gezeigte Kühlteilblechpaket 10 ist direkt mit dem Läuferkühlverbindungsrohr 18, welches über ein Läuferanschlusselement 21 mit einem Läuferkühlkanal 19 verbunden ist, welcher nach Innen gerichtet ist und der über einen in der Läuferhohlwelle 8 angeordneten Läuferhohlwellenkanal 20 und einem in der Drehdurchführung 26 angeordneten Siphonrohr 27 mit dem Läuferkühlmittelhauptzufluss 38 verbunden. In gleicher Art und Weise sind auch die anderen fünf Läuferkühlverbindungsrohre 18 zur Kühlfluidabführung radial verteilt ausgebildet, welche am Kühlteilblechpaket 10 über eine Hohlschraube 22 angekuppelt sind, dabei durch die anderen Läuferteilpakete bzw. Läuferteilblechpakete 4 geführt sind und andererseits über ein gekröpftes Läuferanschlusselement 21 über einen nach innen gerichteten Läuferkühlkanal 19 zum Raum um das Siphonrohr 27 und über die Drehdurchführung 26 zum Läuferkühlmittelhauptabfluss 37 verbunden. Dabei wird das erwärmte Kühlfluid aus den jeweils fluiddichten Kühlteilblechpaketen 10 wieder direkt abgeleitet und auf direktem Weg nach außen geführt. Hier erfolgt eine Parallelschaltung der einzelnen Kühlteilblechpakete 10.

In einer anderen einfacheren aber kühltechnisch nicht so effektiv wirkenden Lösung sind nur zwei durchgehende Läuferkühlverbindungsrohre 18 größeren Querschnitts im Läufer 3 angeordnet, wobei diese alle Kühlteilblechpakete 10 untereinander verbinden. Diese zwei durchgehenden Läuferkühlverbindungsrohre 18 sind jeweils genau um 180 Grad versetzt angeordnet und sind durch alle Läuferteilpakete bzw. Läuferteilblechpakete 4 geführt. In diesen Läuferteilpaketen bzw. Läuferteilblechpakete 4 befinden sich an entsprechender Stelle entsprechende Öffnungen. Ein Läuferkühlverbindungsrohr 18 wirkt dabei als Zuleitkanal und eines als Ableitkanal für die Kühlflüssigkeit. Die Läuferwelle 7 ist hier gleichfalls als Läuferhohlwelle 8 ausgeführt. In dieser Läuferhohlwelle 8 ist der Läuferhohlwellenkanal 20 so angeordnet, dass durch diesen die Kühlflüssigkeit über den an der Drehdurchführung 26 angebrachten Läuferkühlmittelhauptzufluss 38 zugeführt wird. Über den radial nach außen durch die Läuferwelle führenden Läuferkühlkanal 19 gelangt die Kühlflüssigkeit durch eine Hohlschraube 22 in das abgekröpfte Läuferanschlusselement 21. Dieses Läuferanschlusselement 21 ist mittels eines dehnbaren Kupplungs- und Verbindungsstücks 28 mit dem Läuferkühlverbindungsrohr 18 verbunden, welches die Kühlflüssigkeit in die einzelnen Kühlteilblechpakete 10 des Läufers 3 über weitere spezielle Verbindungs- und Zuführelemente verteilt. Das Kühlfluid durchfließt nun die Kühlteilblechpakete 10 radial kreisbogenförmig in beide Richtungen und wird über das gegenüber angeordnete zweite Läuferkühlverbindungsrohr 18 wieder abgeführt. Dieses ist wiederum mit allen Kühlteilblechpaketen 10 des Läufers 3 an den entsprechenden Stellen verbunden. Dabei entsteht in diesem Fall eine Reihenschaltung der Kühlteilblechpakete 10. In den Blechen des Läuferteilpakets oder Läuferteilblechpakets 4 sind spezielle Aussparungen 24 für die Läuferkühlverbindungsrohre 18 vorgesehen. Das erwärmte Kühlmedium wird nun über einen radial nach innen führenden Läuferkühlkanal 19, das in den Raum um das Siphonrohr 27 mündet, zur Drehdurchführung 26 geleitet, an welchem der Läuferkühlmittelhauptabfluss 37 angeordnet ist. Das Siphonrohr 27 ist durch eine Drehdurchführung 26 geführt über die das Kühlmittel zuströmt. Durch das Siphonrohr 27 wird eine sichere Abtrennung von Kühlmittelzu- und Kühlmittelablauf erreicht.

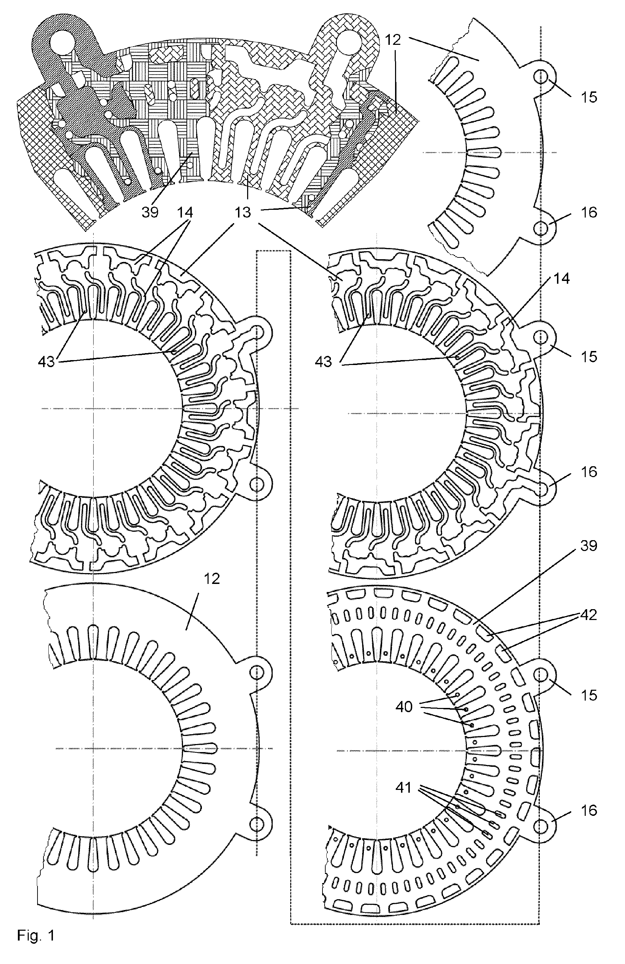

Figur 1 zeigt fünf Kühlteilbleche 11 in bevorzugter Ausführung, davon zwei Begrenzungsbleche 12 und drei Kühlmittelleitbleche für ein optimal kühltechnisch wirkendes Kühlteilblechpaket 10 für einen Ständer 1. Dieses so ausgeführte optimale Kühlteilblechpaket 10 wird, wie die anderen auch, von zwei Begrenzungsblechen 12 links und rechts in Richtung der anliegenden Ständerteilblechpakete 2 begrenzt und abgedichtet. In der Mitte wird ein spezielles Axialleitblech 39 angeordnet. Dieses Axialleitblech 39 entspricht in seiner Form genau der Blechform der Einzelbleche des Ständerteilblechpakets 2 und bewirkt vorrangig eine axiale Strömungsführung des Kühlmittels im Inneren des Kühlteilblechpakets 10. Im Inneren sind allerdings entsprechend gestaltete Bohrungen 40, Langlöcher 41 und Öffnungen 42 angeordnet, die als kreisförmige, radiale und axiale Kühlmediumführungen und Kühlmediumverteilungen wirken. Links und rechts des Axialleitblechs 39 sind je ein mit speziellen Kühlmittelleitblechfenstern zur Kühlmittelführung 14 versehenes Kühlmitteleitblech 13 angeordnet. Die Kühlmittelleitblechfenster zur Kühlmittelführung 14 sind so geformt und ausgebildet, dass diese mit den speziell gestalteten Bohrungen 40, Langlöchern 41 und Öffnungen 42 korrespondieren, so dass ein System von untereinander verbundenen Öffnungen 42, Langlöchern 41 und Bohrungen 40 entsteht, d. h. das an bestimmten Stellen eine zielgerichtete Zwangsführung des Kühlmittelstroms erfolgt. Über den Ständeranschlussstutzen für den Zulauf 15 wird das Kühlmedium in das Kühlteilblechpaket 10 eingespeist. Hier ist eins der radial weiter außen gelegenen Kühlmittelleitblechfenster zur Kühlmittelführung 14 nach außen vergrößert ausgebildet und dadurch mit der Bohrung des Ständeranschlussstutzens 15 verbunden, so dass das Kühlmittel radial nach innen fließen kann. Im Zusammenhang mit den Öffnungen 42 im Axialleitblech 39 verteilt sich das Kühlmittel kreisbogenförmig über den gesamten Umfang entlang des äußeren Radius des Kühlmittelleitblechs 13. Dann fließt das Kühlmittel ein kleines Stück radial und axial durch die Langlöcher 41 nach innen in die sogenannten Teilkanäle 43. Diese Teilkanalöffnungen sind so geformt, dass diese bis nahezu in den Zahnkopfbereich sich erstrecken. Durch diese Teilkanäle 43 fließt dass Kühlmittel radial nach innen umspült praktisch den Nutgrund und fließt weiter nach Innen bis in den Bereich der Zahnköpfe, wo es dann axial durch das Axialleitblech 39 in das zweite Kühlmittelleitblech 13 überströmt. In dessen Teilkanälen 43 fließt das Kühlmittel radial nach außen umspült praktisch erneut den Nutgrund und wird durch die anderen Langlöcher 41 nach außen in die Kühlmittelleitblechfenster zur Kühlmittelführung 14 geführt. Hier erfolgt eine kreisbogenförmige Strömung in Richtung des Kühlmittelleitblechfensters zur Kühlmittelführung 14, welches mit der Bohrung für den Ständeranschlussstutzen für Ablauf 16 verbunden ist. Bei dem erfindungsgemäßen Kühlsystem für eine rotierende elektrische Maschine höchster Leistungsdichte, mit Fluidkühlung in einem geschlossenen Kühlmittelkreislauf im Ständer und/oder im Läufer, bestehend aus zwei oder mehreren miteinander verbundenen Teilblechpaketen und wobei die Teilblechpakete voneinander beabstandet sind und der Läufer aus entweder aus massiven Teilkörpern oder aus geblechten Läuferteilblechpaketen besteht, erfolgt eine sehr effektive Kühlung der elektromagnetisch aktiven Bereiche, d. h. die Wärme wird direkt in unmittelbarer Nähe des Entstehungsortes abgeführt, ohne dass wie sonnst nicht anders möglich der Wärmeübergang über größere Abstände oder mehrere unterschiedliche Materialien erfolgen muss.

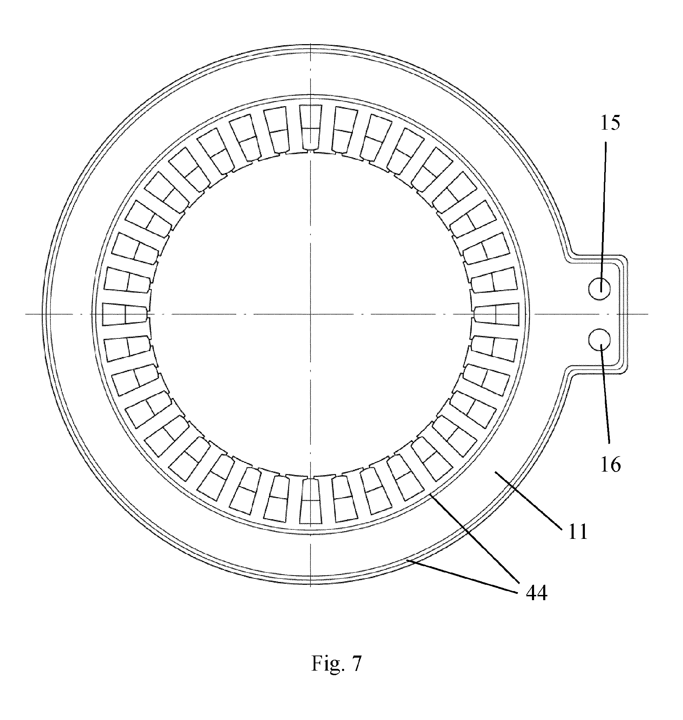

In Figur 7 ist ein Kühlteilblech 11 gezeigt, welches als Begrenzungsblech 12 ausgeführt ist. Die beiden Dichtungsnuten 44 sind als umlaufende Nuten in das Blechmaterial eingearbeitet. Die innere Dichtungsnut 45 und auch die äußere Dichtungsnut 46 können beispielsweise durch Fräsen oder Elektroerodieren erzeugt werden. Beim Setzen der einzelnen Kühlteilbleche 11 zu dem neuartigen Kühlteilblechpaket 10 wird in jede Dichtungsnut 44 ein durchgängiger 0-Ring aus Gummi oder einem anderen geeigneten Dichtungsmaterial, wie beispielsweise Viton eingelegt. Mit dieser einfachen aber bewährten Dichtungsausführung als schnell einlegbaren 0-Ringdichtung wird ein zuverlässiges Abdichten des gesamten Kühlteilblechpakets 10 über die gesamte Nutzungsdauer der betreffenden elektrischen Maschine erreicht. Die Kühlmittelzuführung und -abführung erfolgt wie bereits vorstehend beschrieben über die in den Kühlmitteleitblechen 13 angeordneten Ständeranschlussstutzen für Zulauf 15 und den Ständeranschlussstutzen für Ablauf 16.

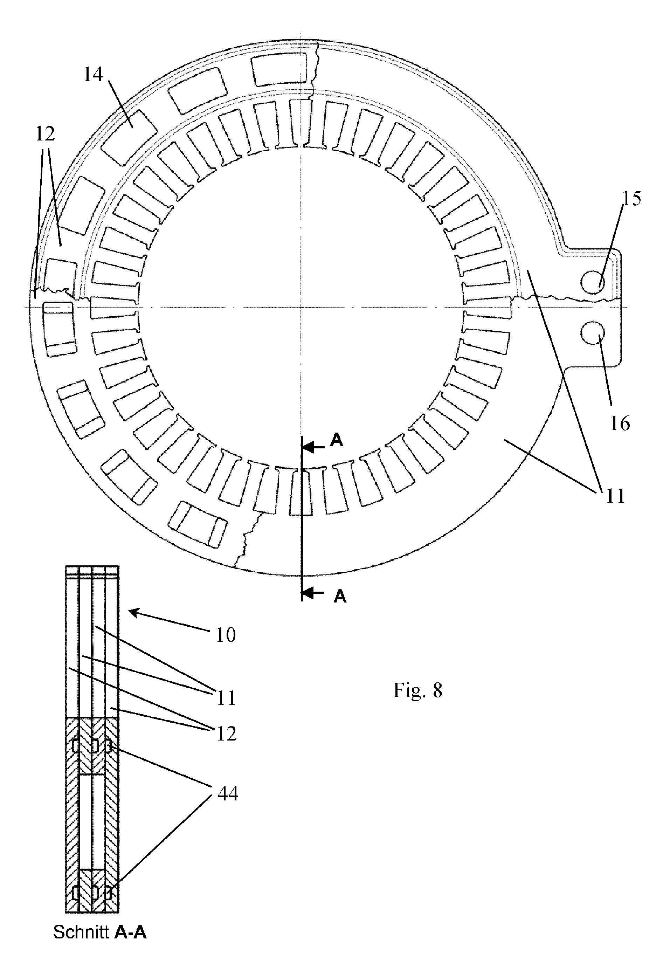

Figur 8 bildet eine Zusammenstellungszeichnung von vier einzelnen aufeinander liegenden, übereinander gesetzten Kühlteilblechen 11 ab, welche zu einem Kühlteilblechpaket 10 untereinander verbunden sind. Als Detail ist ein Schnitt durch ein Kühlteilblechpaket 10, bestehend aus einem innen angeordneten Kühlmittelleitblech 13 ohne Dichtungsnuten 44, einem innen angeordneten Kühlmittelleitblech 13 mit zwei Dichtungsnuten 44 und zwei außen angeordneten Begrenzungsblechen 12 mit je einer inneren Dichtungsnut 45 und einer äußeren Dichtungsnut 46 abgebildet. Hier ist noch einmal die Lage und Anordnung der Dichtungsnuten innerhalb eines Kühlteilblechpaketes 10 schematisch ersichtlich. Der wesentliche Vorteil dieser fertigungstechnisch zwar aufwändigeren Lösung ist neben der sehr guten Wärmeabführung aus den Kühlteilblechpaketen 10 die absolute Dichtigkeit auch bei extremen Belastungsschwankungen einer solcherart ausgeführten rotierenden elektrischen Maschine bei gleichzeitiger höchster Leistungsdichte.

### Bezugszugszeichenliste

- 1: Ständer
- 2: Ständerteilblechpaket
- 3: Läufer
- 4: Läuferteilpaket oder Läuferteilblechpaket
- 5: Ständerwicklung
- 6: Läuferwicklung
- 7: Läuferwelle
- 8: Läuferhohlwelle
- 9: Pressrahmen
- 10: Kühlteilblechpaket
- 11: Kühlteilblech
- 12: Begrenzungsblech
- 13: Kühlmittelleitblech
- 14: Kühlmittelleitblechfenster zur Kühlmittelführung
- 15: Ständeranschlussstutzen für Zulauf
- 16: Ständeranschlussstutzen für Ablauf
- 17: Ständerkühlverbindungsrohr
- 18: Läuferkühlverbindungsrohr
- 19: Läuferkühlkanal
- 20: Läuferhohlwellenkanal
- 21: Läuferanschlusselement
- 22: Hohlschraube
- 23: Engstelle für Volumenstromsymmetrie
- 24: Aussparungen für Läuferkühlverbindungsrohr
- 25: Läuferanschlussstutzen
- 26: Drehdurchführung
- 27: Siphonrohr
- 28: Dehnbares Kupplungs- und Verbindungsstück
- 29: Lagerschild
- 30: Strömungsverlauf im Ständer
- 31: Strömungsverlauf im Läufer
- 32: Bohrung für Zuganker
- 33: Kühlmittelhauptverteiler
- 34: Kühlmittelhauptsammler
- 3 5: Kühlmittelhauptzufluss
- 36: Kühlmittelhauptabfluss
- 37: Läuferkühlmittelhauptabfluss
- 38: Läuferkühlmittelhauptzufluss
- 39: Axialleitblech
- 40: Bohrungen
- 41: Langlöcher
- 42: Öffnungen
- 43: Teilkanal
- 44: Dichtungsnuten
- 45: innere Dichtungsnut
- 46: äußere Dichtungsnut

## Patentansprüche

1. Kühlsystem für eine rotierende elektrische Maschine höchster Leistungsdichte, mit Fluidkühlung in einem geschlossenen Kühlmittelkreislauf im Ständer und/oder im Läufer, bestehend aus zwei oder mehreren miteinander verbundenen Teilblechpaketen,
wobei die Teilblechpakete voneinander beabstandet sind und
der Läufer aus massiven Teilkörpern oder aus geblechten Läuferteilblechpaketen besteht, **dadurch gekennzeichnet,**
**dass** zwischen den Ständerteilblechpaketen (2) und/oder den Läuferteilpaketen und/oder Läuferteilblechpaketen (4) fluiddichte Kühlteilblechpakete (10) angeordnet sind,
diese fluiddichten Kühlteilblechpakete (10) aus mindestens drei Kühlteilblechen (11) bestehen, die fluiddichten Kühlteilblechpakete (10) von einem Kühlfluid durchströmt werden und
die Kühlteilblechpakete (10) einzeln oder untereinander mit einem Kühlmittelhauptzufluss (35) und einem Kühlmittelhauptabfluss (36) verbunden angeordnet sind.

2. Kühlsystem für eine rotierende elektrische Maschine höchster Leistungsdichte nach Anspruch 1,
**dadurch gekennzeichnet,**
**dass** das fluiddichte Kühlteilblechpaket (10) aus vier Kühlteilblechen (11) besteht.

3. Kühlsystem für eine rotierende elektrische Maschine höchster Leistungsdichte nach Anspruch 1,
**dadurch gekennzeichnet,**
**dass** die fluiddichten Kühlteilblechpakete (10) im Ständer (1) und/oder im Läufer (3) die gleiche Innerkontur, wie Zähne, Nuten und/oder Aussparungen aufweisen, wie die Ständerteilblechpakete (2) und/oder Läuferteilpakete oder Läuferteilblechpakete (4).

4. Kühlsystem für eine rotierende elektrische Maschine höchster Leistungsdichte nach Anspruch 1 und 3,
**dadurch gekennzeichnet,**
**dass** die fluiddichten Kühlteilblechpakete (10) aus zwei Begrenzungsblechen (12) und ein, zwei oder mehreren Kühlmittelleitblechen (13) bestehen und mit Anschlüssen zur Fluidzufuhr oder Fluidabfuhr versehen sind.

5. Kühlsystem für eine rotierende elektrische Maschine höchster Leistungsdichte nach Anspruch 1,
**dadurch gekennzeichnet,**
**dass** die Kühlteilbleche (11) des fluiddichten Kühlteilblechpakets (10) untereinander mittels einer Löt-, Schweiß-, Kleb- und/oder Pressverbindung verbunden ausgebildet sind.

6. Kühlsystem für eine rotierende elektrische Maschine höchster Leistungsdichte nach Anspruch 1,
**dadurch gekennzeichnet,**
**dass** an einer oder mehreren Stellen der Strömungsquerschnitt der fluiddichten Kühlmittelleitbleche (13) durch Engstellen zur Volumenstromsymmetrie (23) verengt ausgebildet sind.

7. Kühlsystem für eine rotierende elektrische Maschine höchster Leistungsdichte nach Anspruch 1,
**dadurch gekennzeichnet,**
**dass** im Läufer die fluiddichten Kühlteilblechpakete (10) durch ein, zwei oder mehrere axial im Läuferteilpaket oder im Läuferteilblechpaket (4) angeordnete Läuferkühlverbindungsrohre (18) verbunden sind und dass das oder die Läuferkühlverbindungsrohre (18) mit Läuferkühlkanälen (19) mit einem Läuferkühlmittelhauptzufluss (38) und über einen Läuferhohlwellenkanal (20) mit einem Läuferkühlmittelhauptabfluss (37) verbunden sind.

8. Kühlsystem für eine rotierende elektrische Maschine höchster Leistungsdichte nach einem der vorstehenden Ansprüche,
**dadurch gekennzeichnet,**
**dass** die fluiddichten Kühlteilblechpakete (10), die Kühlteilbleche (11) die Begrenzungsbleche (12) und/oder die Kühlmittelleitbleche (13) aus Aluminium, oder Kupfer, oder aus Elektroblech oder aus Dichtungswerkstoffen oder aus einer Kombination aus diesen Werkstoffen bestehen.

9. Kühlsystem für eine rotierende elektrische Maschine höchster Leistungsdichte nach einem der vorstehenden Ansprüche,
**dadurch gekennzeichnet,**
**dass** die fluiddichten Kühlteilblechpakete (10) außerhalb des Ständers (1) oder innerhalb des Ständers (1) mittels Ständerkühlverbindungsrohren (17) mit einem Kühlmittelhauptverteiler (33) und einem Kühlmittelhauptsammler (34) verbunden sind.

10. Kühlsystem für eine rotierende elektrische Maschine höchster Leistungsdichte nach einem der vorstehenden Ansprüche,
**dadurch gekennzeichnet,**
**dass** die Breite der einzelnen Kühlteilblechpakete (10) unterschiedlich ausgebildet ist.

11. Kühlsystem für eine rotierende elektrische Maschine höchster Leistungsdichte nach Anspruch 1,
**dadurch gekennzeichnet,**
**dass** das Kühlteilblechpaket (10) aus mindestens fünf Kühlteilblechen (11) besteht,
wobei mindestens zwei Begrenzungsbleche (12), mindestens zwei Kühlmittelleitbleche (13) und mindestens mittig ein Axialleitblech (39) untereinander so verbunden sind, dass mittels eines Systems von untereinander verbundenen Kühlmittelleitblechfenstern zur Kühlmittelführung (14), darauf abgestimmten Öffnungen (42), abgestimmte Anordnung von Langlöchern (41) und damit verbunden angeordneten Teilkanälen (43) und Bohrungen (40) eine kreisbogenförmige, radiale und axiale Zwangsführung eines Kühlmediums vom Ständeranschlussstutzen für den Zulauf (15) bis in die Zahnköpfe des Kühlteilblechpaketes (10) und wieder zurück bis zum Ständeranschlussstutzen für den Ablauf (16) erfolgt.

12. Kühlsystem für eine rotierende elektrische Maschine höchster Leistungsdichte nach einem der vorstehenden Ansprüche,
**dadurch gekennzeichnet,**
**dass** pro Kühlteilblech (11) einseitig nach Innen gerichtet mindestens zwei Dichtungsnuten (44) angeordnet sind,
wobei der Durchmesser der inneren Dichtungsnut (45) kleiner ist,
und der Durchmesser des äußeren Dichtungsnut (46) größer ist
als der Durchmesser des Kreisrings in dem die Kühlmittelleitblechfenster zur Kühlmittelführung (14) angeordnet sind
und in den Dichtungsnuten (44) 0-Ringe im Kühlteilblechpaket (10) eingelegt sind.
